# EUROPEAN PATENT SPECIFICATION

(11) **EP 3 466 629 B1**
(45) Date of publication and mention of the grant of the patent: **04.08.2021**
(21) Application number: 17195026.4
(22) Date of filing: 05.10.2017
(51) Int. Cl.: B28D 5/00, B28D 5/04, B23D 57/00

(54) **WAFER CUTTING WIRE SAW**
DRAHTSÄGE ZUM WAFERSCHNEIDEN
SCIE À FIL DE COUPE DE TRANCHE

(43) Date of publication of application: 10.04.2019
(73) Proprietor: Precision Surfacing Solutions GmbH, 3645 Gwatt (Thun) (CH)
(72) Inventor: BERGER, Markus, 3645 Gwatt (CH)
(74) Representative: Patentbüro Paul Rosenich AG

(56) References cited:
- EP-A1- 0 549 893
- JP-A- 2014 076 523

## Description

The invention relates to a wafer cutting wire saw for cutting a plurality of wafers from a workpiece according to the preamble of claim 1.

EP 0549893 A1 discloses a wire saw for slicing workpieces, such as semiconductor ingots, into wafers. The wire guiding roller includes a large-diameter section and small-diameter sections formed at either end thereof, the large-diameter section being coated with a sleeve of synthetic resin. The roller bearing devices rotatably support the small-diameter sections. To keep, with a simple structure, roller bearing devices at the same and substantially constant temperature, working fluid is applied not only to the slicing sections, but also to roller bearing devices.

JP 2014 076523_A discloses a wire saw with wire guide rollers. The wire guide rollers are rotatably mounted by means of bearings. A moving mechanism is provided for integrally and periodically reciprocating the processing rollers on both sides of the processing part in the direction for crossing with the travel direction of the wire. The moving mechanism is constituted of piezoelectric elements provided between a device frame and spindles as a shaft part of the processing rollers.

Wire saws according to prior art have rotatable holding members to which the wire guiding rollers for supporting the cutting wire web are detachably mounted. This is done by axially pressing a cone-shaped (tapered) surface of the holding member against a complementary surface of the wire guiding roller. In such a way the wire guiding roller is releasably clamped between opposite holding members.

In the state of the art it is known to hold the holding members firmly with strong (=large) bearings and make the wire guide roller stiff by keeping it short, as for example shown in document CN202293065U which discloses the features of the preamble of claim 1, or in documents JP 5964197 B2, KR 20160086592 A.

The large bearings delimit the rotational frequency of the wire guide rollers because the speeds along the circumference of the bearing (and thus also friction losses and temperature) increase linearly with the radius of the bearings. Keeping the rotational frequencies low increases the cutting time and thus reduces the output. Since wafer quality increases with higher speeds of the cutting wire, the delimitation of rotational frequency has an adverse effect on the wafer quality.

Making the wire guide roller short is also undesirable since it reduces the throughput of the wire saw in terms of number of wafers.

The object of the invention is to overcome the problems mentioned above and to provide a wire saw that yields high wafer quality and at the same reduce cutting time while keeping a high throughput. At the same time the roller mounts - including the holding members and the bearings by which the holding members are rotatably supported - should have a place saving design. This reduces costs of the machine.

According to the invention, there is provided a wire saw defined by the features of claim 1, in particular wherein the distance between the first roller engaging portion of the first holding member and the second roller engaging portion of the second holding member is at least 6 times larger, preferably at least 8 times larger, more preferred at least 10 times larger, than the inner diameter of the at least one bearing surrounding the shaft portion of the first holding member or second holding member, preferably of the bearing which is closest to the roller engaging portion.

By the inventive ratio as defined above, the holding members may optimally adapt to the tension forces exerted by the cutting wire web onto the wire guiding rollers. The smaller inner diameter of the bearing leads to less radial displacement of the outer bearing ring. This makes a larger distance between the opposing roller engaging portions possible since more bending of the roller can be allowed. The holding members may now more easily adapt to the forces transmitted from the wire guiding roller. This causes the holding members to tilt according to a common bending line which describes the bending of the unit consisting of holding members and wire guiding roller clamped in between. As it turns out, the additional bending does not impair the wafer quality nor does it harm the wire guide rollers (that are now more flexible to adapt) or any other component parts of the machine.

The smaller inner diameter of the bearing with respect to the larger distance between the opposing roller engaging portions allows to drive the holding members at higher rotational speeds, since the relative speed within the bearing - and thus also the friction - becomes smaller with decreasing diameter of the bearing (v=R x ω). The friction is lowered even further since the rolling elements of the bearing (e.g. cylindrical or ball shaped elements) have a larger contact area with the bearing rings so that they deform less.

At the same time, the increased length of the wire guiding roller allows to increase the wire web. Larger workpieces or more workpieces may be cut in parallel.

The roller engaging portion of a holding member is that portion of the holding member that during operation engages the wire guiding roller, i.e. abuts against a complementary portion of the wire guiding roller.

The distance between the first roller engaging portion of the first holding member and the second roller engaging portion of the second holding member preferably corresponds to the distance of the roller engaging portions during operation of the wire saw, i.e. with the wire guiding roller clamped between the holding members. In the releasing state the opposing roller engaging portions may be distanced from each other slightly more than in operational state, in order to allow removal/exchange of the wire guiding roller.

In a preferred embodiment the wire saw comprises at least two wire guiding rollers for carrying a cutting wire web, wherein at least one of the wire guiding rollers is releasably clamped between the first holding member and the second holding member of a mount, wherein the axis of the wire guiding roller essentially coincides with the rotational axes of the first holding member and the second holding member. This embodiment describes the operational state of the wire saw, in which the wire guiding roller(s) is mounted to the wire saw. In the mounted state (operational state) of the wire guide rollers, also the cutting wire may be placed on the wire guides rollers in windings, to form the cutting wire web.

In a preferred embodiment one of the at least one bearing, preferably the bearing which is closest to the roller engaging portion, is a radial bearing, preferably a roller bearing. The radial bearing may take up radial forces, however still allows tilting of the holding member within the bearing support. The amount of allowable tilt depends on the bearing type chosen.

In a preferred embodiment at least one of the holding members is supported by at least two bearings within the bearing support and wherein the distance between the first roller engaging portion of the first holding member and the second roller engaging portion of the second holding member is at least 5 times larger, preferably at least 10 times larger, more preferred at least 15 times larger, than the axial distance between the axial center of the bearing, which is closest to the roller engaging portion, and the axial center of the neighboring bearing. The short distance between the bearings allows high (tilting) flexibility of the holding member within the bearing support and allows at the same time a place saving design. "Axial center of the bearing" means the middle of the axial extension of the bearing.

In a preferred embodiment at least one of the holding members is supported by at least two bearings within the bearing support and wherein the distance between the first roller engaging portion of the first holding member and the second roller engaging portion of the second holding member is at least 5 times larger, preferably at least 10 times larger, more preferred at least 15 times larger, than the axial distance between the bearing, which is closest to the roller engaging portion, and the bearing, which is farthest from the roller engaging portion. Also here, the short distance between the bearings allows high (tilting) flexibility of the holding member within the bearing support and allows at the same time a place saving design.

In a preferred embodiment the diameter of the wire receiving surface of the wire guiding roller is larger, preferably at least 1,5 times larger, more preferred at least 2 times larger, than the inner diameter of the at least one bearing surrounding the shaft portion of the first holding member or second holding member, preferably of the bearing which is closest to the roller engaging portion. As already mentioned above, a small inner diameter of the bearing is advantageous due to the optimal force transmission between wire guiding roller and holding member and it allows for higher rotational speeds.

In a preferred embodiment the length of the wire guiding roller is at least 3 times larger, preferably at least 4 times larger, more preferred at least 5 times larger, than the diameter of the wire receiving surface of the wire guiding roller. This ratio also reflects the inventive idea of increasing the distance between the opposing roller engaging portions and decreasing the inner diameter of the bearing. By making the diameter of the wire receiving surface of the wire guiding roller larger, the wire speed is augmented while not increasing the speeds in the bearings.

In a preferred embodiment at least one of the holding members is supported by at least two bearings within the bearing support, wherein at least one of the at least two bearings is an axial bearing, preferably a ball bearing.

In a further embodiment one of the holding members, preferably the second holding member, is supported within the bearing support by means of only one radial bearing, and/or the other of the holding members, preferably the first holding member, is supported within the bearing support by means of only one radial bearing and one or two axial bearings.

In a further embodiment all bearings are arranged outside of the wire guiding roller, i.e. bearings do not extend within the wire guide roller. By keeping the holding member's portion, that extends into the wire guide roller, small, the wire guide rollers can be replaced more easily since they have to be removed in radial direction.

In a preferred embodiment the first roller engaging portion of the first holding member and/or the second roller engaging portion of the second holding member comprises a tapered portion which is symmetrically to the rotational axis of the holding member,
wherein preferably the tapered portion of the holding member abuts against an engaging portion of the wire guiding roller, which comprises a portion which is complementary to the tapered portion of the engaging portion of the holding member.

A coupling via a tapered portion in connection with the inventive ratio yield optimal results in handling with the tension forces of the cutting wire web.

In a preferred embodiment the first roller engaging portion of the first holding member and/or the second roller engaging portion of the second holding member comprises an axial stop portion,
wherein preferably the axial stop portion is perpendicular to the rotational axis of the holding member,
wherein preferably the axial stop portion is disposed radially outside of the tapered portion.

The axial stop portion allows axial force transmission between wire guiding roller and holding member via the axial stop portion. This ensures that no kink is formed in the engaging area between wire guiding roller and holding member.

In a preferred embodiment at least one of the holding members is a prolongation of or connected to the rotor of an electromotor. The electromotor has a stator and a rotor, which is surrounded by the stator. It is preferred, if the rotor is not supported within the stator. In a preferred embodiment the rotor, which is surrounded by the stator, is only held by the holding member. The holding member and the rotor form a rotatable unit, which is only held by bearing(s) which is/are arranged in an area between the electromotor and the roller engaging portion of the holding member.

In a preferred embodiment the rotor is held within the electromotor or within the stator of the electromotor such that the end portion of the rotor which is farthest from the holding member has - with respect to a non-rotating structure surrounding said end portion of the rotor, which structure may be a portion of the stator or a portion of the housing of the electromotor - a radial clearance of at least 0.1mm, preferably of at least 0.3mm (such as between 0.5 and 0.6mm), preferably in form of an air gap. A tilting movement of high extent is allowed to the holding member.

In a preferred embodiment the rotor is rotatably arranged within the electromotor and is supported only outside the stator, preferably only on the side of the electromotor facing the holding member. Also here, tilting of the holding member relative to the axis of rotation is allowed to a high extent.

In a preferred embodiment the wire saw comprises a releasable clamping mechanism for clamping a wire guiding roller between the holding members.

In a preferred embodiment the clamping mechanism comprises a pulling member, preferably a pulling rod, extending between the holding members and through the wire guiding roller, wherein the pulling member may be brought from a locked state, in which the holding members clamp the wire guiding roller, into a released state, in which the wire guiding roller is releasable from the holding members.

Further embodiments of the invention are indicated in the figures and in the dependent claims. The list of reference marks forms part of the disclosure. The invention will now be explained in detail by the drawings. In the drawings:
- Fig. 1: shows a wire guide roller clamped between opposing roller mounts,
- Fig. 2: shows in an enlarged view the first roller mount of Fig. 1,
- Fig. 3: shows in an enlarged view the second roller mount of Fig. 1,
- Fig. 4: shows schematically a wire saw in a vertical cross section
- Fig. 5: shows schematically a wire saw in a horizontal cross section.

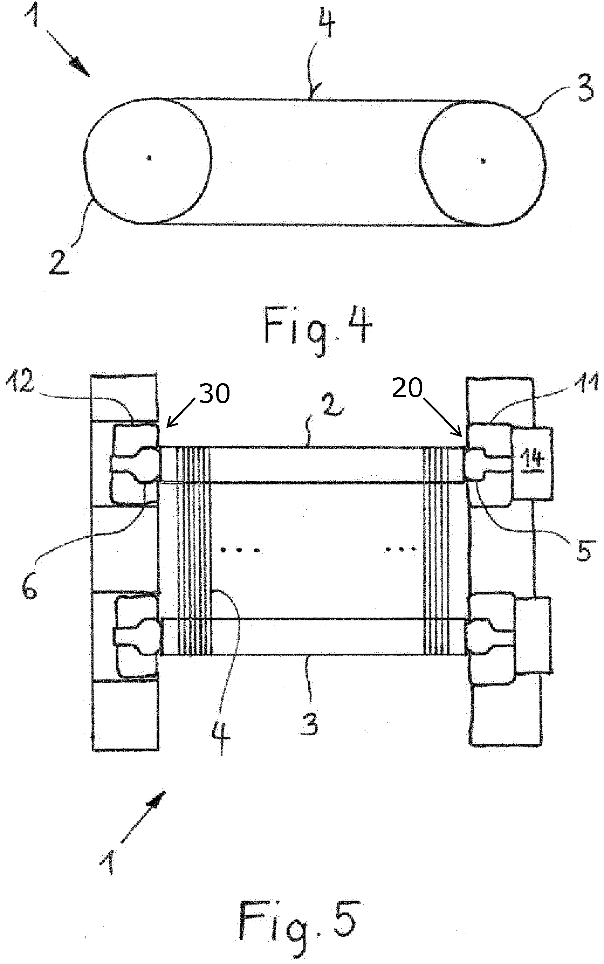

Fig. 4 and 5 show schematically a wafer cutting wire saw 1 for cutting a plurality of wafers from a workpiece, comprising at least two roller mounts 20, 30, wherein each roller mount 20, 30 is capable of releasably supporting a wire guiding roller 2, 3 for carrying a cutting wire web 4.

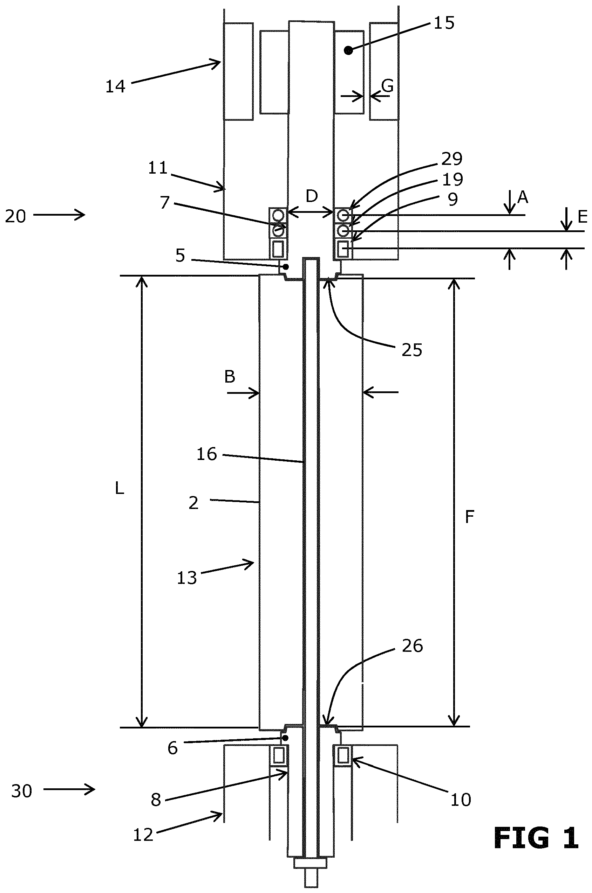

Figs. 1 to 3 show the roller mounts 20, 30 with the wire guiding roller 2 in more detail.

In the present embodiment each of the roller mounts 20, 30 comprise:
- a first rotatable holding member 5 having a first shaft portion 7 and a first roller engaging portion 25 for engaging the wire guiding roller 2, 3 from a first side, and
- a second rotatable holding member 6 having a second shaft portion 8 and a second roller engaging portion 26 for engaging the wire guiding roller 2, 3 from a second side, which is opposite to the first side.

The roller engaging portions 25, 26 face each other and the rotational axis of the first holding member 5 and the rotational axis of the second holding member 6 essentially coincide with each other.

Each of the holding members 5, 6 is rotatably supported by means of at least one bearing 9, 10, which surrounds the shaft portion 7, 8 of the holding member 5, 6 and is accommodated within a bearing support 11, 12.

According to the invention the distance F between the first roller engaging portion 25 and the second roller engaging portion 26 is at least 6 times larger, preferably at least 8 times larger, more preferred at least 10 times larger, than the inner diameter D of the at least one bearing 9, 10 surrounding the shaft portion 7, 8 of the first holding member 5 or second holding member 6.

Preferably, for calculation of above ratio the diameter D of the bearing 9, 10 which is closest to the roller engaging portion 25, 26 is used.

In the present embodiment of Fig. 1, which drawn to scale, the ratio F/D amounts to approximately 9,3.

As can be seen from Fig. 1 and 5 wire guiding roller 2 for carrying a cutting wire web 4 is releasably clamped between the first holding member 5 and the second holding member 6 of a mount 20, 30. The axis of the wire guiding roller 2, 3 essentially coincides with the rotational axes of the first holding member 5 and the second holding member 6.

The wire saw 1 of Fig. 1 comprises a releasable clamping mechanism for clamping a wire guiding roller 2, 3 between the holding members 5, 6. The clamping mechanism may comprise a pulling member, here a pulling rod 16, extending between the holding members 5, 6 and through the wire guiding roller 2, 3. The pulling member may be brought from a locked state, in which the holding members 5, 6 clamp the wire guiding roller 2, 3, into a released state, in which the wire guiding roller 2, 3 is releasable from the holding members 5, 6. Means for applying a clamping force may pull via the pulling rod 16 second bearing support 12 towards first bearing support 11.

At least one bearing 9, 10 - here: the bearing 9, 10 which is closest to the roller engaging portion 25, 26 - is a radial bearing, preferably a roller bearing (see Fig. 1).

In the embodiment of the Fig. 1 the first holding member 5 is supported by three bearings 9, 19, 29 within the bearing support 11. Here, the distance F between the first roller engaging portion 25 and the second roller engaging portion 26 is at least 5 times larger, preferably at least 10 times larger, more preferred at least 15 times larger, (in Fig. 1 approximately 26 times larger) than the axial distance E between the axial center of the bearing 9, which is closest to the roller engaging portion 25, and the axial center of the neighboring bearing 19.

Bearings 29 and 19 may be seen as one single axial bearing.

In a further preferred embodiment the distance F is at least 5 times larger, preferably at least 10 times larger, more preferred at least 15 times larger, than the axial distance A between the bearing 9, which is closest to the roller engaging portion 25, and the bearing 29, which is farthest from the roller engaging portion 25. The ratio F/A is approximately in 13,5 in the embodiment of Fig. 1, which is drawn to scale.

The diameter B of the wire receiving surface 13 of the wire guiding roller 2, 3 is larger, preferably at least 1,5 times larger, more preferred at least 2 times larger, than the inner diameter D of the at least one bearing 9, 10 surrounding the shaft portion 7, 8 of the first holding member 5 or second holding member 6, preferably of the bearing (9, 10) which is closest to the roller engaging portion 25, 26.

It is preferred if the length L of the wire guiding roller 2, 3 is at least 3 times larger, preferably at least 4 times larger, more preferred at least 5 times larger, than the diameter B of the wire receiving surface 13 of the wire guiding roller 2, 3. The ratio L/B is approximately 4,3 in Fig. 1.

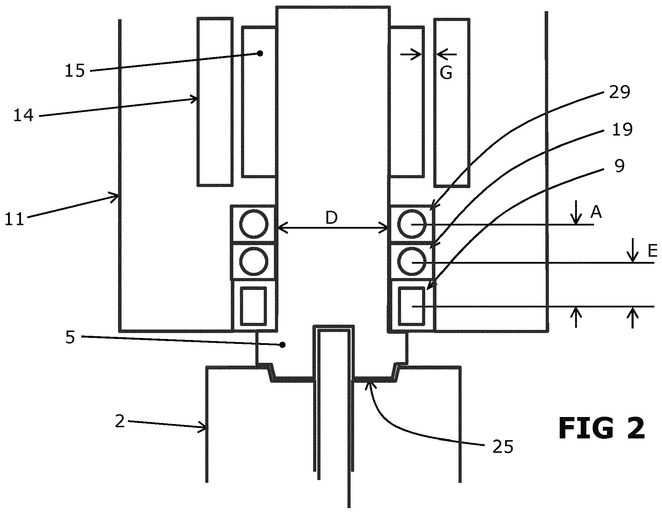

As indicated in Fig. 1 and 2 bearing 9 is a radial bearing and bearings 19 and 29 form an axial bearing, preferably a ball bearing.

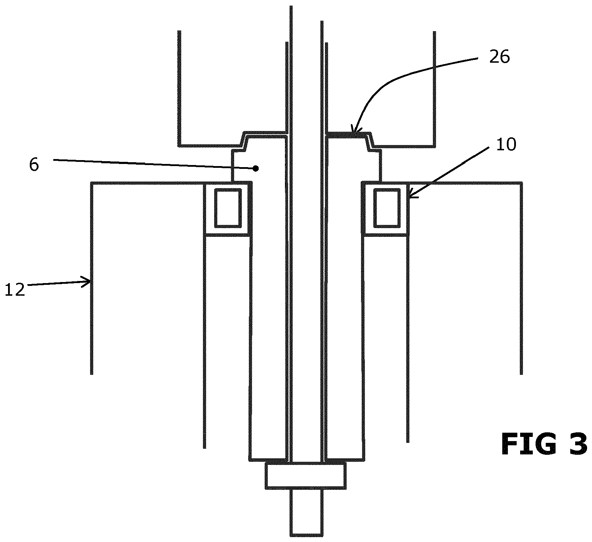

The first roller engaging portion 25 of the first holding member 5 and the second roller engaging portion 26 of the second holding member 6 each comprise a tapered portion which is symmetrically arranged to the rotational axis of the holding member 5, 6. The tapered portion of the holding member 5, 6 abuts against an engaging portion of the wire guiding roller 2, 3, which comprises a portion which is complementary to the tapered portion of the engaging portion 25, 26 of the holding member 5, 6 (see Fig. 2 and 3).

Additionally, the first roller engaging portion 25 and the second roller engaging portion 26 each comprise an axial stop portion, which may be perpendicular to the rotational axis of the holding member 5, 6. In the embodiment shown, the axial stop portion is disposed radially outside of the tapered portion.

As can be seen from Fig. 1 and 2 the first holding member 5 is a prolongation of or connected to the rotor 15 of an electromotor 14. The wire saw 1 comprises an electromotor 14 having a stator and a rotor 15, wherein the holding member 5 and the rotor 15 form a rotatable unit, which is only held by bearing(s) 9, 19, 29 which is/are arranged in an area between the electromotor 14 and the roller engaging portion 25 of the holding member 5.

It is preferred if the rotor 14 is held within the electromotor 14 such that the end portion of the rotor 15 which is farthest from the holding member 5 has a radial clearance of at least 0.1mm, preferably of at least 0.3mm (such as between 0.5 and 0.6mm), preferably in form of an air gap.

The rotor 14 may be rotatably arranged within the electromotor 15 and supported only outside the stator, preferably only on the side of the electromotor 15 facing the holding member 5.

The invention is not restricted to these embodiments. Other variants will be obvious for the person skilled in the art and are considered to lie within the scope of the invention as defined by the following claims. Individual features described in all parts of the above specification, particularly with respect to the figures may be combined with each other to form other embodiments.

### List of reference signs

- 1: wafer cutting wire saw
- 2: wire guiding roller
- 3: wire guiding roller
- 4: cutting wire web
- 5: first rotatable holding member
- 6: second rotatable holding member
- 7: first shaft portion
- 8: second shaft portion
- 9: bearing
- 10: bearing
- 11: bearing support
- 12: bearing support
- 13: wire receiving surface
- 14: electromotor
- 15: rotor
- 16: pulling rod
- 19: bearing
- 20: roller mount
- 25: first roller engaging portion
- 26: second roller engaging portion
- 29: bearing
- 30: roller mount
- A: axial distance between the bearing, which is closest to the roller engaging portion, and the bearing, which is farthest from the roller engaging portion
- B: diameter of the wire receiving surface 13
- D: inner diameter of the bearing
- E: axial distance between the axial center of the bearing, which is closest to the roller engaging portion, and the axial center of the neighboring bearing
- F: distance between the first roller engaging portion 25 and the second roller engaging portion 26
- G: air gap
- L: length of the wire guiding roller

## Claims

1. Wafer cutting wire saw (1) for cutting a plurality of wafers from a workpiece, comprising at least two roller mounts (20, 30), wherein each roller mount (20, 30) is capable of releasably supporting a wire guiding roller (2, 3) for carrying a cutting wire web (4),
wherein at least one, preferably each, of the roller mounts (20, 30) comprises:
- a first rotatable holding member (5) having a first shaft portion (7) and a first roller engaging portion (25) for engaging the wire guiding roller (2, 3) from a first side, and
- a second rotatable holding member (6) having a second shaft portion (8) and a second roller engaging portion (26) for engaging the wire guiding roller (2, 3) from a second side, which is opposite to the first side,
wherein the roller engaging portions (25, 26) face each other and wherein the rotational axis of the first holding member (5) and the rotational axis of the second holding member (6) essentially coincide with each other,
wherein each of the holding members (5, 6) is rotatably supported by means of at least one bearing (9, 10), which surrounds the shaft portion (7, 8) of the holding member (5, 6) and is accommodated within a bearing support (11, 12),
**characterized in that**
the distance (F) between the first roller engaging portion (25) of the first holding member (5) and the second roller engaging portion (26) of the second holding member (6) is at least 6 times larger, preferably at least 8 times larger, more preferred at least 10 times larger, than the inner diameter (D) of the at least one bearing (9, 10) surrounding the shaft portion (7, 8) of the first holding member (5) or second holding member (6), preferably of the bearing (9, 10) which is closest to the roller engaging portion (25, 26).

2. Wire saw according to claim 1, **wherein** the wire saw (1) comprises at least two wire guiding rollers (2, 3) for carrying a cutting wire web (4), wherein at least one of the wire guiding rollers (2, 3) is releasably clamped between the first holding member (5) and the second holding member (6) of a mount (20, 30), wherein the axis of the wire guiding roller (2, 3) essentially coincides with the rotational axes of the first holding member (5) and the second holding member (6).

3. Wire saw according to claim 1 or 2, **wherein** one of the at least one bearing (9, 10), preferably the bearing (9, 10) which is closest to the respective roller engaging portion (25, 26), is a radial bearing, preferably a roller bearing.

4. Wire saw according to one of the preceding claims, **wherein** at least one of the holding members (5) is supported by at least two bearings (9, 19, 29) within the bearing support (11) and wherein the distance (F) between the first roller engaging portion (25) of the first holding member (5) and the second roller engaging portion (26) of the second holding member (6) is at least 5 times larger, preferably at least 10 times larger, more preferred at least 15 times larger, than the axial distance (E) between the axial center of the bearing (9), which is closest to the roller engaging portion (25), and the axial center of the neighboring bearing (19).

5. Wire saw according to one of the preceding claims, **wherein** at least one of the holding members (5) is supported by at least two bearings (9, 19, 29) within the bearing support (11) and wherein the distance (F) between the first roller engaging portion (25) of the first holding member (5) and the second roller engaging portion (26) of the second holding member (6) is at least 5 times larger, preferably at least 10 times larger, more preferred at least 15 times larger, than the axial distance (A) between the bearing (9), which is closest to the roller engaging portion (25), and the bearing (29), which is farthest from the roller engaging portion (25).

6. Wire saw according to one of the preceding claims, **wherein** the diameter (B) of a wire receiving surface (13) of the wire guiding roller (2, 3) is larger, preferably at least 1,5 times larger, more preferred at least 2 times larger, than the inner diameter (D) of the at least one bearing (9, 10) surrounding the shaft portion (7, 8) of the first holding member (5) or second holding member (6), preferably of the bearing (9, 10) which is closest to the roller engaging portion (25, 26).

7. Wire saw according to one of the preceding claims, **wherein** the length (L) of the wire guiding roller (2, 3) and/or the distance (F) between the first roller engaging portion (25) of the first holding member (5) and the second roller engaging portion (26) of the second holding member (6) is at least 3 times larger, preferably at least 4 times larger, more preferred at least 5 times larger, than the diameter (B) of the wire receiving surface (13) of the wire guiding roller (2, 3).

8. Wire saw according to one of the preceding claims, **wherein** at least one of the holding members (5) is supported by at least two bearings (9, 19, 29) within the bearing support (11), wherein at least one of the at least two bearings (19, 29) is an axial bearing, preferably a ball bearing.

9. Wire saw according to one of the preceding claims, **wherein** the first roller engaging portion (25) of the first holding member (5) and/or the second roller engaging portion (26) of the second holding member (6) comprises a tapered portion which is symmetric to the rotational axis of the holding member (5, 6), wherein preferably the tapered portion of the holding member (5, 6) abuts against an engaging portion of the wire guiding roller (2, 3), which comprises a portion which is complementary to the tapered portion of the engaging portion (25, 26) of the holding member (5, 6).

10. Wire saw according to one of the preceding claims, **wherein** the first roller engaging portion (25) of the first holding member (5) and/or the second roller engaging portion (26) of the second holding member (6) comprises an axial stop portion,
wherein preferably the axial stop portion is perpendicular to the rotational axis of the holding member (5, 6),
wherein preferably the axial stop portion is disposed radially outside of the tapered portion.

11. Wire saw according to one of the preceding claims, **wherein** at least one of the holding members (5) is a prolongation of or connected to the rotor (15) of an electromotor (14) **and/or wherein** the wire saw (1) comprises an electromotor (14) having a stator and a rotor (15), wherein the holding member (5) and the rotor (15) form a rotatable unit, which is only held by bearing(s) (9, 19, 29) which is/are arranged in an area between the electromotor (14) and the roller engaging portion (25) of the holding member (5).

12. Wire saw according to claim 11, **wherein** the rotor (15) is held within the electromotor (14) or within the stator of the electromotor (14) such that the end portion of the rotor (15) which is farthest from the holding member (5) has a radial clearance of at least 0.1mm, preferably of at least 0.3mm, preferably in form of an air gap (G).

13. Wire saw according to claim 11 or 12, **wherein** the rotor (14) is rotatably arranged within the electromotor (15) and is supported only outside the stator, preferably only on the side of the electromotor (15) facing the holding member (5).

14. Wire saw according to one of the preceding claims, **wherein** the wire saw (1) comprises a releasable clamping mechanism for clamping a wire guiding roller (2, 3) between the holding members (5, 6).

15. Wire saw according to claim 14, **wherein** the clamping mechanism comprises a pulling member, preferably a pulling rod (16), extending between the holding members (5, 6) and through the wire guiding roller (2, 3), wherein the pulling member may be brought from a locked state, in which the holding members (5, 6) clamp the wire guiding roller (2, 3), into a released state, in which the wire guiding roller (2, 3) is releasable from the holding members (5, 6).

## Patentansprüche

1. Waferschneidedrahtsäge (1) zum Schneiden mehrerer Wafer aus einem Werkstück, die mindestens zwei Rollenhalter (20, 30) umfasst,
wobei jeder Rollenhalter (20, 30) in der Lage ist, eine Drahtführungsrolle (2, 3) zum Transportieren eines Schneidedrahtfelds (4) lösbar zu halten,
wobei mindestens einer, vorzugsweise jeder der Rollenhalter (20, 30) Folgendes umfasst:
- ein erstes drehbares Halteelement (5) mit einem ersten Wellenabschnitt (7) und einem ersten die Rolle in Eingriff nehmenden Abschnitt (25) zum Ineingriffnehmen der Drahtführungsrolle (2, 3) von einer ersten Seite und
- ein zweites drehbares Halteelement (6) mit einem zweiten Wellenabschnitt (8) und einem zweiten die Rolle in Eingriff nehmenden Abschnitt (26) zum Ineingriffnehmen der Drahtführungsrolle (2, 3) von einer zweiten Seite, die der ersten Seite gegenüberliegt,
wobei die die Rolle in Eingriff nehmenden Abschnitte (25, 26) einander zugewandt sind und die Rotationsachse des ersten Halteelements (5) und die Rotationsachse des zweiten Halteelements (6) im Wesentlichen miteinander übereinstimmen,
wobei jedes der Halteelemente (5, 6) mithilfe mindestens eines Lagers (9, 10), das den Wellenabschnitt (7, 8) des Halteelements (5, 6) umgibt und in einem Lagerbock (11, 12) untergebracht ist, drehbar gelagert ist,
**dadurch gekennzeichnet, dass**
der Abstand (F) zwischen dem ersten die Rolle in Eingriff nehmenden Abschnitt (25) des ersten Halteelements (5) und dem zweiten die Rolle in Eingriff nehmenden Abschnitt (26) des zweiten Halteelements (6) mindestens 6-mal größer, vorzugsweise mindestens 8-mal größer, besonders bevorzugt mindestens 10-mal größer ist als der Innendurchmesser (D) des mindestens einen Lagers (9, 10), das den Wellenabschnitt (7, 8) des ersten Halteelements (5) oder des zweiten Halteelements (6) umgibt, vorzugsweise des Lagers (9, 10), das am nächsten an dem die Rolle in Eingriff nehmenden Abschnitt (25, 26) liegt.

2. Drahtsäge nach Anspruch 1, wobei die Drahtsäge (1) mindestens zwei Drahtführungsrollen (2, 3) zum Transportieren eines Schneidedrahtfelds (4) umfasst, wobei mindestens eine der Drahtführungsrollen (2, 3) lösbar zwischen das erste Halteelement (5) und das zweite Halteelement (6) eines Halters (20, 30) geklemmt ist, wobei die Achse der Drahtführungsrolle (2, 3) im Wesentlichen mit den Rotationsachsen des ersten Halteelements (5) und des zweiten Halteelements (6) übereinstimmt.

3. Drahtsäge nach Anspruch 1 oder 2, wobei es sich bei einem des mindestens einen Lagers (9, 10), vorzugsweise dem Lager (9, 10), das am nächsten an dem die Rolle in Eingriff nehmenden Abschnitt (25, 26) liegt, um ein Radiallager, vorzugsweise ein Rollenlager handelt.

4. Drahtsäge nach einem der vorhergehenden Ansprüche, wobei mindestens eines der Halteelemente (5) in mindestens zwei Lagern (9, 19, 29) in dem Lagerbock (11) gelagert ist und der Abstand (F) zwischen dem ersten die Rolle in Eingriff nehmenden Abschnitt (25) des ersten Halteelements (5) und dem zweiten die Rolle in Eingriff nehmenden Abschnitt (26) des zweiten Halteelements (6) mindestens 5-mal größer, vorzugsweise mindestens 10-mal größer, besonders bevorzugt mindestens 15-mal größer ist als der axiale Abstand (E) zwischen der axialen Mitte des Lagers (9), die am nächsten an dem die Rolle in Eingriff nehmenden Abschnitt (25) liegt, und der axialen Mitte des benachbarten Lagers (19).

5. Drahtsäge nach einem der vorhergehenden Ansprüche, wobei mindestens eines der Halteelemente (5) in mindestens zwei Lagern (9, 19, 29) in dem Lagerbock (11) gelagert ist und der Abstand (F) zwischen dem ersten die Rolle in Eingriff nehmenden Abschnitt (25) des ersten Halteelements (5) und dem zweiten die Rolle in Eingriff nehmenden Abschnitt (26) des zweiten Halteelements (6) mindestens 5-mal größer, vorzugsweise mindestens 10-mal größer, besonders bevorzugt mindestens 15-mal größer ist als der axiale Abstand (A) zwischen dem Lager (9), das am nächsten an dem die Rolle in Eingriff nehmenden Abschnitt (25) liegt, und dem Lager (29), das am weitesten von dem die Rolle in Eingriff nehmenden Abschnitt (25) entfernt liegt.

6. Drahtsäge nach einem der vorhergehenden Ansprüche, wobei der Durchmesser (B) einer Drahtaufnahmefläche (13) der Drahtführungsrolle (2, 3) größer, vorzugsweise mindestens 1,5-mal größer, besonders bevorzugt mindestens 2-mal größer ist als der Innendurchmesser (D) des mindestens einen Lagers (9, 10), das den Wellenabschnitt (7, 8) des ersten Halteelements (5) oder des zweiten Halteelements (6) umgibt, vorzugsweise des Lagers (9, 10), das am nächsten an dem die Rolle in Eingriff nehmenden Abschnitts (25, 26) liegt.

7. Drahtsäge nach einem der vorhergehenden Ansprüche, wobei die Länge (L) der Drahtführungsrolle (2, 3) und/oder der Abstand (F) zwischen dem ersten die Rolle in Eingriff nehmenden Abschnitt (25) des ersten Halteelements (5) und dem zweiten die Rolle in Eingriff nehmenden Abschnitt (26) des zweiten Halteelements (6) mindestens 3-mal größer, vorzugsweise mindestens 4-mal größer, besonders bevorzugt mindestens 5-mal größer ist als der Durchmesser (B) der Drahtaufnahmefläche (13) der Drahtführungsrolle (2, 3).

8. Drahtsäge nach einem der vorhergehenden Ansprüche, wobei mindestens eines der Halteelemente (5) in mindestens zwei Lagern (9, 19, 29) in dem Lagerbock (11) gelagert ist, wobei es sich bei mindestens einem der mindestens zwei Lager (19, 29) um ein Axiallager, vorzugsweise ein Kugellager handelt.

9. Drahtsäge nach einem der vorhergehenden Ansprüche, wobei der erste die Rolle in Eingriff nehmende Abschnitt (25) des ersten Halteelements (5) und/oder der zweite die Rolle in Eingriff nehmende Abschnitt (26) des zweiten Halteelements (6) einen sich verjüngenden Abschnitt umfasst, der zur Rotationsachse des Halteelements (5, 6) symmetrisch ist, wobei der sich verjüngende Abschnitt des Halteelements (5, 6) vorzugsweise an einem eingreifenden Abschnitt der Drahtführungsrolle (2, 3) anliegt, die einen Abschnitt umfasst, der dem sich verjüngenden Abschnitt des eingreifenden Abschnitts (25, 26) des Halteelements (5, 6) entspricht.

10. Drahtsäge nach einem der vorhergehenden Ansprüche, wobei der erste die Rolle in Eingriff nehmende Abschnitt (25) des ersten Halteelements (5) und/oder der zweite die Rolle in Eingriff nehmende Abschnitt (26) des zweiten Halteelements (6) einen axialen Anschlagabschnitt umfasst,
wobei der axiale Anschlagabschnitt vorzugsweise senkrecht zur Rotationsachse des Halteelements (5, 6) verläuft,
wobei der axiale Anschlagabschnitt vorzugsweise radial außerhalb des sich verjüngenden Abschnitts angeordnet ist.

11. Drahtsäge nach einem der vorhergehenden Ansprüche, wobei mindestens eines der Halteelemente (5) eine Verlängerung des Rotors (15) eines Elektromotors (14) oder damit verbunden ist und/oder die Drahtsäge (1) einen Elektromotor (14) mit einem Stator und einem Rotor (15) umfasst, wobei das Halteelement (5) und der Rotor (15) eine drehbare Einheit bilden, die nur von einem oder mehreren Lagern (9, 19, 29) gehalten wird, das/die in einem Bereich zwischen dem Elektromotor (14) und dem die Rolle in Eingriff nehmenden Abschnitt (25) des Halteelements (5) angeordnet ist/sind.

12. Drahtsäge nach Anspruch 11, wobei der Rotor (15) so in dem Elektromotor (14) oder dem Stator des Elektromotors (14) gehalten wird, dass der Endabschnitt des Rotors (15), der am weitesten von dem Halteelement (5) entfernt liegt, ein Radialspiel von mindestens 0,1 mm, vorzugsweise von mindestens 0,3 mm, vorzugsweise in Form eines Luftspalts (G) aufweist.

13. Drahtsäge nach Anspruch 11 oder 12, wobei der Rotor (14) drehbar in dem Elektromotor (15) angeordnet und nur außerhalb des Stators, vorzugsweise nur auf der zum Halteelement (5) weisenden Seite des Elektromotors (15) gelagert ist.

14. Drahtsäge nach einem der vorhergehenden Ansprüche, wobei die Drahtsäge (1) einen lösbaren Klemmmechanismus zum Festklemmen einer Drahtführungsrolle (2, 3) zwischen den Halteelementen (5, 6) umfasst.

15. Drahtsäge nach Anspruch 14, wobei der Klemmmechanismus ein Ziehelement, vorzugsweise eine Ziehstange (16) umfasst, die zwischen den Halteelementen (5, 6) und durch die Drahtführungsrolle (2, 3) hindurch verläuft, wobei das Ziehelement aus einem festgestellten Zustand, in dem die Halteelemente (5, 6) die Drahtführungsrolle (2, 3) festklemmen, in einen gelösten Zustand gebracht werden kann, in dem sich die Drahtführungsrolle (2, 3) aus den Halteelementen (5, 6) lösen lässt.

## Revendications

1. Scie à fil de coupe de tranche (1) pour découper une pluralité de tranches dans une pièce, comprenant au moins deux montures de rouleau (20, 30),
dans laquelle chaque monture de rouleau (20, 30) est capable de supporter de façon libérable un rouleau de guidage de fil (2, 3) pour porter une trame de fil de coupe (4),
dans laquelle au moins une des montures de rouleau (20, 30), et de préférence chacune de celles-ci, comprend :
- un premier élément de maintien rotatif (5) ayant une première portion d'axe (7) et une première portion d'engagement de rouleau (25) pour engager le rouleau de guidage de fil (2, 3) depuis un premier côté, et
- un deuxième élément de maintien rotatif (6) ayant une deuxième portion d'axe (8) et une deuxième portion d'engagement de rouleau (26) pour engager le rouleau de guidage de fil (2, 3) depuis un deuxième côté, qui est opposé au premier côté,
dans laquelle les portions d'engagement de rouleau (25, 26) se font face et dans laquelle l'axe de rotation du premier élément de maintien (5) et l'axe de rotation du deuxième élément de maintien (6) coïncident essentiellement entre eux,
dans laquelle chacun des éléments de maintien (5, 6) est supporté de manière rotative par au moins un palier (9, 10), qui entoure la portion d'axe (7, 8) de l'élément de maintien (5, 6) et est logé dans un support de palier (11, 12),
**caractérisée en ce que**
la distance (F) entre la première portion d'engagement de rouleau (25) du premier élément de maintien (5) et la deuxième portion d'engagement de rouleau (26) du deuxième élément de maintien (6) est au moins 6 fois supérieure, de préférence au moins 8 fois supérieure, et de préférence encore au moins 10 fois supérieure au diamètre interne (D) dudit au moins un palier (9, 10) entourant la portion d'axe (7, 8) du premier élément de maintien (5) ou du deuxième élément de maintien (6), de préférence du palier (9, 10) qui est le plus proche de la portion d'engagement de rouleau (25, 26).

2. Scie à fil selon la revendication 1, dans laquelle la scie à fil (1) comprend au moins deux rouleaux de guidage de fil (2, 3) pour porter une trame de fil de coupe (4), dans laquelle au moins un des rouleaux de guidage de fil (2, 3) est serré de manière libérable entre le premier élément de maintien (5) et le deuxième élément de maintien (6) d'une monture (20, 30), dans laquelle l'axe du rouleau de guidage de fil (2, 3) coïncide essentiellement avec les axes de rotation du premier élément de maintien (5) et du deuxième élément de maintien (6).

3. Scie à fil selon la revendication 1 ou 2, dans laquelle l'un desdits au moins un palier (9, 10), de préférence le palier (9, 10) le plus proche de la portion d'engagement de rouleau respective (25, 26), est un palier radial, de préférence un roulement mécanique.

4. Scie à fil selon l'une des revendications précédentes, dans laquelle au moins l'un des éléments de maintien (5) est supporté par au moins deux paliers (9, 19, 29) dans le support de palier (11), et dans laquelle la distance (F) entre la première portion d'engagement de rouleau (25) du premier élément de maintien (5) et la deuxième portion d'engagement de rouleau (26) du deuxième élément de maintien (6) est au moins 5 fois plus grande, de préférence au moins 10 plus grande, et de préférence encore au moins 15 fois plus grande que la distance axiale (E) entre le centre axial du palier (9), qui est le plus proche de la portion d'engagement de rouleau (25), et le centre axial du palier voisin (19) .

5. Scie à fil selon l'une des revendications précédentes, dans laquelle au moins l'un des éléments de maintien (5) est supporté par au moins deux paliers (9, 19, 29) dans le support de palier (11), et dans laquelle la distance (F) entre la première portion d'engagement de rouleau (25) du premier élément de maintien (5) et la deuxième portion d'engagement de rouleau (26) du deuxième élément de maintien (6) est au moins 5 fois plus grande, de préférence au moins 10 plus grande, et de préférence encore au moins 15 fois plus grande que la distance axiale (A) entre le palier (9), qui est le plus proche de la portion d'engagement de rouleau (25), et le palier (29), qui est le plus éloigné de la portion d'engagement de rouleau (25).

6. Scie à fil selon l'une des revendications précédentes, dans laquelle le diamètre (B) d'une surface de réception de fil (13) du rouleau de guidage de fil (2, 3) est supérieur, de préférence au moins 1,5 fois supérieur, de préférence encore au moins 2 fois supérieur au diamètre interne (D) dudit au moins un palier (9, 10) entourant la portion d'axe (7, 8) du premier élément de maintien (5) ou du deuxième élément de maintien (6), de préférence du palier (9, 10) qui est le plus proche de la portion d'engagement de rouleau (25, 26).

7. Scie à fil selon l'une des revendications précédentes, dans laquelle la longueur (L) du rouleau de guidage de fil (2, 3) et/ou la distance (F) entre la première portion d'engagement de rouleau (25) du premier élément de maintien (5) et la deuxième portion d'engagement de rouleau (26) du deuxième élément de maintien (6) est au moins 3 fois supérieure, de préférence au moins 4 fois supérieure, de préférence encore au moins 5 fois supérieure au diamètre (B) de la surface de réception de fil (13) du rouleau de guidage de fil (2, 3) .

8. Scie à fil selon l'une des revendications précédentes, dans laquelle au moins l'un des éléments de maintien (5) est supporté par au moins deux paliers (9, 19, 29) dans le support de palier (11), dans laquelle au moins un desdits au moins deux paliers (19, 29) est un palier axial, de préférence un roulement à billes.

9. Scie à fil selon l'une des revendications précédentes, dans laquelle la première portion d'engagement de rouleau (25) du premier élément de maintien (5) et/ou la deuxième portion d'engagement de rouleau (26) du deuxième élément de maintien (6) comprend une portion conique qui est symétrique par rapport à l'axe de rotation de l'élément de maintien (5, 6), dans laquelle la portion conique de l'élément de maintien (5, 6) vient de préférence à butée contre une portion d'engagement du rouleau de guidage de fil (2, 3), qui comprend une portion qui est complémentaire à la portion conique de la portion d'engagement (25, 26) de l'élément de maintien (5, 6).

10. Scie à fil selon l'une des revendications précédentes, dans laquelle la première portion d'engagement de rouleau (25) du premier élément de maintien (5) et/ou la deuxième portion d'engagement de rouleau (26) du deuxième élément de maintien (6) comprend une portion d'arrêt axial,
dans laquelle la portion d'arrêt axial est de préférence perpendiculaire à l'axe de rotation de l'élément de maintien (5, 6),
dans laquelle la portion d'arrêt axial est disposée de préférence radialement à l'extérieur de la portion conique.

11. Scie à fil selon l'une des revendications précédentes, dans laquelle au moins l'un des éléments de maintien (5) est une prolongation du rotor (15) d'un moteur électrique (14) ou est connecté à celui-ci, et/ou dans laquelle la scie à fil (1) comprend un moteur électrique (14) ayant un stator et un rotor (15), dans laquelle l'élément de maintien (5) et le rotor (15) forment une unité rotative, qui est uniquement maintenue par un ou plusieurs paliers (9, 19, 29) qui sont agencés dans une zone entre le moteur électrique (14) et la portion d'engagement de rouleau (25) de l'élément de maintien (5) .

12. Scie à fil selon la revendication 11, dans laquelle le rotor (15) est maintenu dans le moteur électrique (14) et dans le stator du moteur électrique (14) de telle sorte que la portion terminale du rotor (15) qui est la plus éloignée de l'élément de maintien (5) présente un écartement radial d'au moins 0,1 mm, de préférence d'au moins 0,3 mm, de préférence sous forme d'un entrefer (G) .

13. Scie à fil selon la revendication 11 ou 12, dans laquelle le rotor (14) est agencé de façon rotative dans le moteur électrique (15) et est supporté uniquement à l'extérieur du stator, de préférence uniquement du côté du moteur électrique (15) qui fait face à l'élément de maintien (5).

14. Scie à fil selon l'une des revendications précédentes, dans laquelle la scie à fil (1) comprend un mécanisme de serrage libérable pour serrer un rouleau de guidage de fil (2, 3) entre les éléments de maintien (5, 6).

15. Scie à fil selon la revendication 14, dans laquelle le mécanisme de serrage comprend un élément de traction, de préférence une barre de traction (16), qui s'étend entre les éléments de maintien (5, 6) et à travers le rouleau de guidage de fil (2, 3), dans laquelle l'élément de traction peut être amené d'une position verrouillée, dans laquelle les éléments de maintien (5, 6) serrent le rouleau de guidage de fil (2, 3), et un état libéré, dans lequel le rouleau de guidage de fil (2, 3) est libérable des éléments de maintien (5, 6).
